(19) **Europäisches Patentamt**
**European Patent Office**
**Office européen des brevets**

(11) **EP 4 489 103 A1**

(12) **EUROPEAN PATENT APPLICATION**
published in accordance with Art. 153(4) EPC

(43) Date of publication:
**08.01.2025 Bulletin 2025/02**

(21) Application number: **22932543.6**

(22) Date of filing: **21.03.2022**

(51) International Patent Classification (IPC):
**H01M 4/133** $^{(2010.01)}$

(52) Cooperative Patent Classification (CPC):
**H01M 4/133; H01M 4/587; H01M 10/0525;**
**H01M 10/0569;** H01M 2004/021; H01M 2004/027;
Y02E 60/10

(86) International application number:
**PCT/CN2022/081993**

(87) International publication number:
**WO 2023/178474 (28.09.2023 Gazette 2023/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventors:
• **FENG, Pengyang**
  **Ningde, Fujian 352100 (CN)**
• **TANG, Jia**
  **Ningde, Fujian 352100 (CN)**

(74) Representative: **Klunker IP**
**Patentanwälte PartG mbB**
**Destouchesstraße 68**
**80796 München (DE)**

(54) **ELECTROCHEMICAL DEVICE AND ELECTRONIC DEVICE COMPRISING SAME**

(57) This application provides an electrochemical device and an electronic device containing the electrochemical device. The electrochemical device provided in this application includes a positive electrode, a separator, an electrolyte solution, and a negative electrode. The negative electrode includes a negative current collector and a negative active material layer disposed on a surface of the negative current collector. The electrochemical device satisfies: $A = W/(I_D/I_G)$, and $150 \leq A \leq 1000$. As tested by differential scanning calorimetry, the negative active material layer exhibits an exothermic peak at a temperature ranging from a room temperature to 450 °C. A peak area of the exothermic peak is W J/g. As tested by Raman spectroscopy, a ratio of a peak intensity at a wavenumber 1350 cm$^{-1}$ to a peak intensity at a wavenumber 1580 cm$^{-1}$ of the negative active material layer is $I_D/I_G$. The electrochemical device of this application achieves improved kinetic performance and cycle performance in addition to a high capacity.

EP 4 489 103 A1

**Description**

**TECHNICAL FIELD**

This application relates to the field of energy storage, and in particular, to an electrochemical device and an electronic device containing same.

**BACKGROUND**

Electrochemical devices, such as a lithium-ion battery, are widely used in the fields such as wearable devices, mobile phones, unmanned aerial vehicles, and notebook computers by virtue of advantages such as a high working voltage, a high energy density, environmental friendliness, stable cycling, and safety. With the continuous development of lithium-ion batteries, the requirements on the lithium-ion batteries applicable to mobile phones are increasingly higher. Especially, the lithium-ion batteries are required to possess both a high energy density and a high fast-charge capability. To meet such a requirement, a conventional practice is to select a negative electrode material prepared from high-capacity needle-like calcined coke by a series of processes such as crushing, graphitization, and surface modification and treatment. However, the effect of this practice is limited on enhancing the kinetic performance of the lithium-ion batteries.

**SUMMARY**

In view of the disadvantages in the prior art, this application provides an electrochemical device to improve kinetic performance and cycle performance of the battery while achieving a high capacity of the electrochemical device. This application further provides an electronic device containing the electrochemical device.

According to a first aspect, this application provides an electrochemical device. The electrochemical device includes a positive electrode, a separator, an electrolyte solution, and a negative electrode. The negative electrode includes a negative current collector and a negative active material layer disposed on a surface of the negative current collector. The electrochemical device satisfies: $A = W/(I_D/I_G)$, and $150 \leq A \leq 1000$. As tested by differential scanning calorimetry, the negative active material layer exhibits an exothermic peak at a temperature ranging from a room temperature to 450°C. A peak area of the exothermic peak is W J/g. As tested by Raman spectroscopy, a ratio of a peak intensity at a wavenumber 1350 cm$^{-1}$ to a peak intensity at a wavenumber 1580 cm$^{-1}$ of the negative active material layer is $I_D/I_G$. The value of the $I_D/I_G$ ratio reflects the degree of surface defects of the negative active material layer. In this application, the value of A is strongly correlated with the kinetic performance of the electrochemical device. An unduly small value of A hinders the exertion of the kinetics of the electrochemical device, and deteriorates the low-temperature discharge performance. If the value of A is unduly high, it indicates that the surface active sites of the negative active material layer are abundant and prone to form side reaction products, thereby impairing the cycle life of the electrochemical device.

According to some embodiments of this application, $150 \leq A \leq 750$.

According to some embodiments of this application, $20 \leq W \leq 490$. In some embodiments of this application, $100 \leq W \leq 300$.

According to some embodiments of this application, $0.13 \leq I_D/I_G \leq 0.54$. In some embodiments of this application, $0.13 \leq I_D/I_G \leq 0.52$.

According to some embodiments of this application, as tested by differential scanning calorimetry, the negative active material layer satisfies at least one of the following characteristics (d) to (f): (d) an exothermic onset temperature of the negative active material layer is $T_1$ °C, satisfying: $100 \leq T_1 \leq 250$; (e) an initial peak temperature in thermal decomposition of the negative active material layer is $T_2$ °C, satisfying: $140 \leq T_2 \leq 440$; or, (f) a complete-decomposition temperature of the negative active material layer is $T_3$ °C, satisfying: $400 \leq T_3 \leq 550$. According to some embodiments of this application, $100 \leq T_1 \leq 230$. In some embodiments of this application, $110 \leq T_1 \leq 205$. According to some embodiments of this application, $150 \leq T_2 \leq 410$. According to some embodiments of this application, $410 \leq T_3 \leq 450$. In this application, the lower the temperatures of $T_1$, $T_2$, and $T_3$, the more easily the negative active material layer decomposes, indicating lower thermal stability, thereby reducing the cycle capacity retention rate. However, at the same time, due to the increase of the active sites, the low-temperature discharge performance is improved gradually. Therefore, controlling $T_1$, $T_2$, and $T_3$ to fall within the ranges specified herein is conducive to improving the cycle performance and low-temperature discharge performance of the electrochemical device.

According to some embodiments of this application, an exothermic power per unit mass of the negative active material layer is P mW/mg, satisfying: $0.035 \leq P \leq 0.280$.

According to some embodiments of this application, the negative active material layer includes a negative active material. The negative active material includes at least one of natural graphite or artificial graphite. According to some embodiments of this application, the negative active material includes natural graphite.

According to some embodiments of this application, the negative active material layer includes negative active material particles containing pores. According to some embodiments of this application, the porosity of the negative active material layer is 20% to 50%.

According to some embodiments of this application, the electrolyte solution includes ethylene carbonate, propylene carbonate, and diethyl carbonate. Based on a mass of the electrolyte solution, a mass percent of the ethylene carbonate is X%, a mass percent of the propylene carbonate is Y%, and a mass percent of the diethyl carbonate is Z%, satisfying: $1.5 \leq X/Y \leq 8$, and $2.5 \leq Z/Y \leq 25$. In some embodiments of this application, $1.5 \leq X/Y \leq 8$, and $3 \leq Z/Y \leq 15$.

According to some embodiments of this application, $15 \leq X \leq 32$, $3 \leq Y \leq 12$, and $30 \leq Z \leq 70$. In some embodiments of this application, $16 \leq X \leq 30$, $4 \leq Y \leq 11$, and $35 \leq Z \leq 60$.

According to a second aspect, this application provides an electronic device. The electronic device includes the electrochemical device disclosed in the first aspect.

The negative electrode of the electrochemical device provided in this application includes a specified negative active material layer, thereby improving kinetic performance and cycle performance while achieving a high capacity of the electrochemical device.

## DETAILED DESCRIPTION

This application is further described below with reference to some embodiments. Understandably, such embodiments are merely intended to illustrate this application but not to limit the scope of this application.

A first aspect of this application provides an electrochemical device. The electrochemical device includes a positive electrode, a separator, an electrolyte solution, and a negative electrode. The negative electrode includes a negative current collector and a negative active material layer disposed on a surface of the negative current collector. The electrochemical device satisfies: $A = W/(I_D/I_G)$, and $150 \leq A \leq 1000$. As tested by differential scanning calorimetry, the negative active material layer exhibits an exothermic peak at a temperature ranging from a room temperature to 450 °C. A peak area of the exothermic peak is W J/g. As tested by Raman spectroscopy, a ratio of a peak intensity at a wavenumber 1350 cm$^{-1}$ to a peak intensity at a wavenumber 1580 cm$^{-1}$ of the negative active material layer is $I_D/I_G$. In this application, the value of A is strongly correlated with the kinetic performance of the electrochemical device. An unduly small value of A hinders the exertion of the kinetics of the electrochemical device, and deteriorates the low-temperature discharge performance. If the value of A is unduly high, it indicates that the surface active sites of the negative active material layer are abundant and prone to form side reaction products, thereby impairing the cycle life of the electrochemical device.

In this application, the peak intensity at 1350 cm$^{-1}$, denoted as $I_D$, and the peak intensity at 1580 cm$^{-1}$, denoted as $I_G$, may vary depending on the measurement instrument, and may be understood as a peak intensity at a wavenumber of 1350 cm$^{-1} \pm 50$ cm$^{-1}$ and a peak intensity at a wavenumber of 1580 cm$^{-1} \pm 50$ cm$^{-1}$, respectively.

According to some embodiments of this application, the value of A may be 150, 200, 250, 300, 350, 400, 450, 500, 550, 600, 650, 700, 750, 800, 850, 900, 950, 1000, or a value falling within a range formed by any two thereof. According to some embodiments of this application, $150 \leq A \leq 750$.

According to some embodiments of this application, $20 \leq W \leq 490$. According to some embodiments of this application, the value of W may be 20, 50, 100, 150, 200, 250, 300, 350, 400, 450, or 490, or a value falling within a range formed by any two thereof. According to some embodiments of this application, $100 \leq W \leq 300$. When the value of A falls within the specified range, the electrochemical device achieves improved cycle performance and low-temperature discharge performance.

According to some embodiments of this application, $0.13 \leq I_D/I_G \leq 0.54$. According to some embodiments of this application, the value of $I_D/I_G$ may be 0.13, 0.15, 0.18, 0.2, 0.25, 0.3, 0.35, 0.4, 0.45, 0.5, 0.52, 0.54, or a value falling within a range formed by any two thereof. According to some embodiments of this application, $0.13 \leq I_D/I_G \leq 0.52$. When the value of $I_D/I_G$ is unduly large, it indicates that there are a relatively large number of defects in the negative active material layer, thereby reducing the electronic conductivity of the negative active material layer and impairing the low-temperature discharge performance of the electrochemical device. When the value of $I_D/I_G$ is unduly small, the ionic conduction rate in the negative active material layer may be reduced, and the low-temperature discharge performance of the electrochemical device may be impaired.

According to some embodiments of this application, as tested by differential scanning calorimetry, the negative active material layer satisfies at least one of the following characteristics (d) to (c): (d) an exothermic onset temperature of the negative active material layer is $T_1$ °C, satisfying: $100 \leq T_1 \leq 250$; (e) an initial peak temperature in thermal decomposition of the negative active material layer is $T_2$ °C, satisfying: $140 \leq T_2 \leq 440$; or, (f) a complete-decomposition temperature of the negative active material layer is $T_3$ °C, satisfying: $400 \leq T_3 \leq 550$. In this application, the lower the temperatures of $T_1$, $T_2$, and $T_3$, the more easily the negative active material layer decomposes, indicating lower thermal stability, thereby reducing the cycle capacity retention rate. However, at the same time, due to the increase of the active sites, the low-temperature discharge performance is improved gradually. Therefore, controlling the values of $T_1$, $T_2$, and $T_3$ to fall within the ranges specified herein is conducive to improving the cycle performance and low-temperature discharge performance of the electrochemical device.

According to some embodiments of this application, $T_1$ is 100, 120, 140, 160, 180, 200, 220, 240, 250, or a value falling within a range formed by any two thereof. According to some embodiments of this application, $T_2$ is 140, 180, 220, 260, 300, 340, 380, 420, 440, or a value falling within a range formed by any two thereof. According to some embodiments of this application, $T_3$ is 400, 420, 460, 480, 500, 520, 540, 550, or a value falling within a range formed by any two thereof. According to some embodiments of this application, $100 \leq T_1 \leq 230$. According to some embodiments of this application, $110 \leq T_1 \leq 205$. According to some embodiments of this application, $150 \leq T_2 \leq 410$. According to some embodiments of this application, $150 \leq T_2 \leq 370$. According to some embodiments of this application, $410 < T_3 \leq 450$.

According to some embodiments of this application, an exothermic power per unit mass of the negative active material layer is P mW/mg, satisfying: $0.035 \leq P \leq 0.280$. According to some embodiments of this application, the value of P is 0.035, 0.05, 0.075, 0.1, 0.125, 0.15, 0.175, 0.2, 0.225, 0.25, 0.275, 0.280, or a value falling within a range formed by any two thereof.

According to some embodiments of this application, the negative active material layer includes a negative active material. The negative active material includes at least one of natural graphite or artificial graphite. According to some embodiments of this application, the negative active material includes natural graphite. Different types of graphite exhibit different thermal stability, and in turn, affect the thermal stability performance of the negative active material layer. The natural graphite or artificial graphite made of different constituents or structures can improve the wettability of the electrolyte solution and shorten the ion transport path, and enhance the cycle performance and low-temperature discharge performance of the electrochemical device.

According to some embodiments of this application, the negative active material layer includes negative active material particles containing pores. According to some embodiments of this application, the porosity of the negative active material layer is 20% to 50%. According to some embodiments of this application, the porosity of the negative active material layer is 20%, 25%, 30%, 35%, 40%, 45%, 50%, or a value falling within a range formed by any two thereof. When the porosity falls within such a range, the electrolyte solution is ensured to exert a good infiltration effect, facilitate ion transport, and enhance the low-temperature discharge performance of the electrochemical device. When the porosity is relatively high, the depletion of active lithium is prone to occur, thereby impairing the cycle performance of the electrochemical device.

According to some embodiments of this application, the negative current collector may include, but is not limited to, copper foil or aluminum foil.

According to some embodiments of this application, the electrolyte solution includes ethylene carbonate, propylene carbonate, and diethyl carbonate. Based on a mass of the electrolyte solution, a mass percent of the ethylene carbonate is X%, a mass percent of the propylene carbonate is Y%, and a mass percent of the diethyl carbonate is Z%, satisfying: $1.5 \leq X/Y \leq 8$, and $2.5 \leq Z/Y \leq 25$. According to some embodiments of this application, $1.5 \leq X/Y \leq 8$, and $3 \leq Z/Y \leq 15$. According to some embodiments of this application, the X/Y ratio is 1.5, 2, 2.5, 3, 3.5, 4, 4.5, 5, 5.5, 6, 6.5, 7, 7.5, 8, or a value falling within a range formed by any two thereof. According to some embodiments of this application, the Z/Y ratio is 2.5, 5, 7.5, 10, 12.5, 15, 17.5, 20, 22.5, 25, or a value falling within a range formed by any two thereof. When the content of the ethylene carbonate, the content of the propylene carbonate, and the content of the diethyl carbonate satisfy the above relation, a low-impedance SEI film can be formed on an anode electrolyte interface to enhance the cycle performance and low-temperature discharge performance of the electrochemical device. However, when the content relationship falls outside the range specified above, the formed SEI film may be caused to be unstable and easily breakable, thereby impairing the cycle performance of the electrochemical device; or, a relatively thick SEI film is formed, thereby increasing the impedance of the anode electrolyte interface, and impairing the low-temperature discharge performance of the electrochemical device.

According to some embodiments of this application, $15 \leq X \leq 32$, $3 \leq Y \leq 12$, and $30 \leq Z \leq 70$. According to some embodiments of this application, $16 \leq X \leq 30$, $4 < Y \leq 11$, and $35 \leq Z \leq 60$. According to some embodiments of this application, X is 15, 17.5, 20, 22.5, 25, 27.5, 30, 32, or a value falling within a range formed by any two thereof. According to some embodiments of this application, Y is 3, 4, 5, 6, 7, 8, 9, 10, 11, 12, or a value falling within a range formed by any two thereof. According to some embodiments of this application, Z is 30, 35, 40, 45, 50, 55, 60, 65, 70, or a value falling within a range formed by any two thereof. When the content of the ethylene carbonate, the content of the propylene carbonate, and the content of the diethyl carbonate satisfy the above relation, the electrochemical device is improved in terms of cycle performance and low-temperature discharge performance.

The electrolyte solution applicable to the electrochemical device of this application further includes a lithium salt, an additive, and other organic solvents.

In some embodiments, the lithium salt includes, but is not limited to: lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalate) borate $LiB(C_2O_4)_2$ (LiBOB), or lithium difluoro(oxalate)borate $LiBF_2(C_2O_4)$ (LiDFOB). In some embodiments, the concentration of the lithium salt in the electrolytic solution is: 0.5 to 3 mol/L, 0.5 to 2 mol/L, or 0.8 to 1.5 mol/L.

In some embodiments, the additive includes, but is not limited to: vinylene carbonate (VC), vinyl ethylene carbonate (VEC), fluoroethylene carbonate (FEC), difluoroethylene carbonate (DFEC), 1,3-propane sultone (PS), ethylene sulfate (DTD), 1,3-dioxane, maleic anhydride, adiponitrile, succinonitrile, 1,3,5-pentanetrinitrile, and 1,3,6-hexanetricarbonitrile.

In some embodiments, the other organic solvents include, but are not limited to, dimethyl carbonate (DMC), dipropyl carbonate (DPC), methyl propyl carbonate (MPC), ethylene propyl carbonate (EPC), or ethyl methyl carbonate (EMC).

The material, constituents, and manufacturing method of the positive electrode applicable to the electrochemical device of this application include any technology disclosed in the prior art.

According to some embodiments of this application, the positive electrode includes a current collector and a positive active material layer disposed on the current collector. According to some embodiments of this application, the positive active material includes, but is not limited to, lithium cobalt oxide ($LiCoO_2$), a lithium nickel-cobalt-manganese (NCM) ternary material, lithium ferrous phosphate (LiFePO4), or lithium manganese oxide ($LiMn_2O_4$).

According to some embodiments of this application, the positive active material layer further includes a binder, and optionally includes a conductive material. The binder improves bonding between particles of the positive active material and bonding between the positive active material and a current collector. In some embodiments, the binder includes: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, nylon, or the like.

According to some embodiments of this application, the conductive material includes, but is not limited to, a carbon-based material, a metal-based material, a conductive polymer, and a mixture thereof. In some embodiments, the carbon-based material includes natural graphite, artificial graphite, carbon black, acetylene black, Ketjen black, carbon fibers, or any combination thereof. In some embodiments, the metal-based material includes metal powder, metal fibers, copper, nickel, aluminum, or silver. In some embodiments, the conductive polymer is a polyphenylene derivative.

According to some embodiments of this application, the positive current collector may include, but is not limited to, aluminum foil.

The material and the shape of the separator used in the electrochemical device of this application are not particularly limited herein, and may be based on any technology disclosed in the prior art. In some embodiments, the separator includes a polymer or an inorganic compound or the like formed from a material that is stable to the electrolyte solution disclosed in this application.

For example, the separator may include a substrate layer and a surface treatment layer. The substrate layer is a non-woven fabric, film or composite film, each having a porous structure. The material of the substrate layer includes at least one of: polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer. The surface treatment layer may be a polymer layer or an inorganic compound layer, or a layer formed by mixing a polymer and an inorganic compound.

The inorganic compound layer includes inorganic particles and a binder. The inorganic particles include at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxide, poly methyl methacrylate, polytetrafluoroethylene, or polyhexafluoropropylene.

The polymer layer includes a polymer. The material of the polymer includes at least one of polyamide, polyacrylonitrile, acrylate polymer, polyacrylic acid, polyacrylic acid sodium salt, polyvinylpyrrolidone, polyvinyl alkoxide, polyvinylidene difluoride, or poly(vinylidene fluoride-co-hexafluoropropylene).

In some embodiments, the electrochemical device according to this application includes, but is not limited to: any type of primary battery, secondary battery, fuel battery, solar battery, or capacitor. In some embodiments, the electrochemical device is a lithium secondary battery. In some embodiments, the lithium secondary battery includes, but is not limited to, a lithium metal secondary battery, a lithium-ion secondary battery, a lithium polymer secondary battery, or a lithium-ion polymer secondary battery.

This application further provides an electronic device, including the electrochemical device according to this application.

The electronic device or apparatus according to this application is not particularly limited. In some embodiments, the electronic devices of this application include, but are not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The following describes this application in more detail with reference to specific embodiments by using a lithium-ion battery as an example of the electrochemical device.

**Embodiments**

**I. Preparing a lithium-ion battery**

**(1) Preparing a positive electrode**

Dissolving lithium cobalt oxide ($LiCoO_2$) as a positive active material, acetylene black as a conductive agent, and polyvinylidene difluoride (PVDF for short) as a binder at a mass ratio of approximately 97.6: 1.2: 1.2 in an N-methyl-pyrrolidone (NMP for short) solvent, and stirring well to obtain a positive electrode slurry. Subsequently, coating positive current collector aluminum foil with the positive electrode slurry, and oven-drying, cold-pressing, cutting, slitting, and drying the aluminum foil to obtain a positive electrode plate.

**(2) Preparing a negative electrode**

<1> Preparing a negative active material

Preparing an A1 material: Selecting at least one of needle green coke, needle calcined coke, petroleum coke, pitch coke, or calcined coke, and crushing the coke until the volume median diameter $Dv_{50}$ is 5 $\mu$m to 8 $\mu$m ($Dv_{50}$ is a particle diameter than which 50% of the sample particles are smaller in a volume-based particle size distribution). Subsequently, heat-treating the needle green coke to 300 °C to 1200 °C to obtain a precursor, and then taking out the precursor to obtain an A1 material.

Preparing an A2 material: Selecting natural graphite ore, and performing crushing/ball-milling and flotation on the natural graphite ore to obtain natural flake graphite. Crushing the natural flake graphite, and selecting the powder with a particle diameter $Dv_{50}$ of 6 $\mu$m to 12 $\mu$m. Spheroidizing the powder to obtain an A2 material.

Mixing A1 and A2 at a mass ratio of A1: A2 = (0 to 100): (100 to 0). Adding a binder in an amount that is 5% to 30% of the mass of (A1+A2), and stirring well. The binder includes at least one of pitch with a softening point of 150 °C, 200 °C, 150 °C, or 300 °C, phenolic resin, or epoxy resin. Placing the mixture into a reactor, heating and stirring the mixture, setting the temperature to 300 °C to 700 °C, and then placing the mixture into a graphitization furnace. Applying a high temperature of 2500 °C to 3500 °C to graphitize the mixture. Finally, mixing the graphitized product with a coating agent, where the coating agent is a mixed phase and is a combination of 10% to 80% solvent and 1% to 50% novel carbon material, where the solvent includes at least one of toluene, ethanol, quinoline, or ethyl ether, and the novel carbon material includes at least one of carbon nanotubes or graphene. Putting the mixture of the graphitized product and the coating agent into a reactor for surface treatment at a temperature of 800 °C to 1500 °C to obtain a negative active material.

The preparation process of a negative active material in the process <1> of preparing a negative electrode is described in detail below by using Embodiment 1 as an example.

Preparing an A1 material: Selecting needle green coke, and crushing the coke until the volume median diameter $Dv_{50}$ is 8 $\mu$m. Subsequently, heat-treating the needle green coke to 1200 °C to obtain a precursor, and then taking out the precursor to obtain an A1 material.

Preparing an A2 material: Selecting natural graphite ore, and performing crushing/ball-milling and flotation on the natural graphite ore to obtain natural flake graphite. Crushing the natural flake graphite, and selecting the powder with a particle diameter $Dv_{50}$ of 8 $\mu$m. Spheroidizing the powder to obtain an A2 material.

Mixing A1 and A2 at a mass ratio of 4: 1. Adding a binder in an amount that is 25% of the mass of (A1+A2), and stirring well. The binder is pitch with a softening point of 200 °C, phenolic resin, epoxy resin, or a combination of one or more thereof. Placing the mixture into a reactor, heating and stirring the mixture, setting the temperature to 500 °C, and then placing the mixture into a graphitization furnace. Applying a high temperature of 3000 °C to graphitize the mixture. Finally, mixing the graphitized product with a coating agent, where the coating agent is a mixed phase and is a combination of 10% to 80% solvent and graphene of a specified mass percent. Putting the mixture into a reactor for surface treatment at a temperature of 1100 °C to obtain a negative active material.

Preparing the negative active materials in Embodiments 2 to 35 and Comparative Embodiments 1 and 2 according to the negative active material preparation process in Embodiment 1 by changing the types and doses of the materials in the preparation process.

<2> Preparing a negative electrode plate: Dispersing a negative active material, styrene-butadiene rubber (SBR) as a binder, sodium carboxymethyl cellulose (CMC) as a thickener at a mass ratio of 97.7: 1.2: 1.1 in a deionized water solvent, stirring well to obtain a slurry. Applying the slurry onto negative current collector copper foil already coated with a conductive layer. Oven-drying and cold-pressing the copper foil to obtain a negative electrode plate.

### (3) Preparing a separator

Using a polyethylene (PE) porous polymer film of approximately 7 $\mu$m in thickness as a separator.

### (4) Preparing an electrolyte solution

Mixing ethylene carbonate (EC), propylene carbonate (PC), diethyl carbonate (DEC), and dimethyl carbonate (DMC) evenly in an argon atmosphere glovebox in which the moisture content is less than 10 ppm. Adding $LiPF_6$ and stirring well to obtain an electrolyte solution. Based on the mass of the electrolyte solution, the mass percent of $LiPF_6$ is 12%.

In Embodiment 1, the mass percent of the ethylene carbonate is 15%, the mass percent of the propylene carbonate is 3%, and the mass percent of the diethyl carbonate is 70%.

The electrolyte solution constituents in Embodiments 2 to 31 and Comparative Embodiments 1 and 2 are identical to the electrolyte solution constituents in Embodiment 1.

The electrolyte solutions in Embodiments 32 to 35 include DMC in addition to the EC, PC, and DEC shown in Table 2.

### (5) Preparing a lithium-ion battery

Stacking the positive electrode plate, the separator, and the negative electrode plate sequentially, placing the separator between the positive electrode and the negative electrode to serve a separation function, and then winding the stacked structure to obtain a bare cell. Welding tabs onto the bare cell and then putting the bare cell into an outer package made of aluminum laminated film foil. Drying the bare cell in the package, and then injecting the prepared electrolyte solution into the dried bare cell. Putting the wound bare cell into the outer package, injecting the electrolyte solution, and sealing the package. Performing steps such as chemical formation, degassing, and edge trimming to obtain a lithium-ion battery. The lithium-ion batteries in the embodiments and the comparative embodiments of this application are all prepared according to the foregoing method.

### II. Test Methods

### (1) Testing the low-temperature discharge capacity retention rate

Leaving a lithium-ion battery test-piece to stand at 25 °C for 5 minutes, and then charging the battery at a constant current of 1.5 C until the voltage reaches 4.48 V, charging the battery at a constant voltage of 4.48 V until the current drops to 0.05 C, and then discharging the battery at a current of 0.5 C until the voltage reaches 3.0 V Recording the capacity at this time as $C_0$. Subsequently, charging the lithium-ion battery at a constant current of 1.5 C until the voltage reaches 4.48 V, charging the battery at a constant voltage of 4.48 V until the current drops to 0.05 C, and then placing the battery into a -20 °C thermostat, and discharging the battery at a constant current of 0.5 C until the voltage reaches 3.0 V Recording the discharge capacity at this time as $C_1$, and calculating the low-temperature discharge capacity retention rate as $C_1/C_0$, expressed in percentage.

### (2) Testing the cycle capacity retention rate

Leaving a lithium-ion battery test-piece to stand for 5 minutes at a temperature of 45 °C, charging the battery at a constant current of 1.5 C until the voltage reaches 4.48 V, charging the battery at a constant voltage of 4.48 V until the current drop to 0.05 C, leaving the battery to stand for 5 minutes, and then discharging the battery at a constant current of 1.0 C until a voltage of 3.0 V, and then leaving the battery to stand for 5 minutes. Recording the capacity at this time as $D_0$. Repeating the above charge-discharge process for 500 cycles, and recording the discharge capacity at the end of the last cycle as $D_1$. Calculating the capacity fading rate of the battery cycled at 45 °C as $D_1/D_0$, expressed in percentage.

### (3) Differential scanning calorimetry (DSC) test

Performing the test in accordance with a standard GB/T 13464-2008 by using an STA449F3-QMS403C instrument. Increasing the temperature from a room temperature to 500 °C at a heating rate ranging from 0.1 K/min to 50 K/min.

Preparing and testing a specimen: Discharging a lithium-ion battery fully until a voltage of 3.0 V, disassembling the battery to obtain a negative active material layer as a specimen, and placing the specimen into a crucible. Subsequently, sealing the crucible that contains the specimen, and placing the crucible onto a bracket of the crucible. Keeping the crucible stable for 20 minutes, and starting the DSC test. Obtaining a curve as a result of the test, converting the curve from a heat flow versus temperature plot to a heat flow versus time plot, performing baseline adjustment and appropriate smoothing, and marking the peak values and enthalpies to obtain a DSC curve. Obtaining, based on the DSC curve, an exothermic onset temperature ($T_1$ °C) of the negative active material layer, an initial peak temperature ($T_2$ °C) in thermal decomposition of the negative active material layer, and a complete-decomposition temperature ($T_3$ °C) of the negative active material layer, an exothermic power per unit mass (P mW/mg) of the negative active material layer, and a peak area of the exothermic peak (W J/g).

### (4) Raman spectroscopy test

Measuring the peak intensity $I_D$ of the negative active material layer specimen at the wavenumber 1350 cm$^{-1}$ and the peak intensity $I_G$ at 1580 cm$^{-1}$ by using an HR Evolution laser microscopic confocal Raman spectrometer. Calculating a ratio of $I_D$ to $I_G$ to obtain an $I_D/I_G$ ratio that reflects the degree of surface defects of the negative active material layer.

### (5) Testing the porosity

Testing the porosity in accordance with the standard GB/T 24586-2009 by using an AccuPyc II 1340 true density meter.

Preparing and testing specimens: Cutting out small discs of a specified area as specimens from a negative active material layer, measuring the apparent volume V of a small disc, and then measuring the true density of the small disc by using a true density meter. Calculating a true volume $V_0$, calculating a percentage of the pore volume in the total volume of the specimen, and calculating the porosity as: porosity = (V - $V_0$)/V $\times$ 100%.

Embodiments 1 to 18 and Comparative Embodiments 1 to 2 are obtained according to the above preparation method. Table 1 shows how the values of W, $I_D/I_G$ ratio, A, and porosity of the negative active material layer affect the cycle performance and low-temperature discharge performance of the lithium-ion battery.

**Table 1**

|  | W | $I_D/I_G$ | A | Porosity (%) | Cycle capacity retention rate (500 cycles) | Low-temperature discharge capacity retention rate (%) |
|---|---|---|---|---|---|---|
| Embodiment 1 | 20 | 0.13 | 154 | 20 | 85.8 | 50 |
| Embodiment 2 | 30 | 0.17 | 176 | 30 | 84.3 | 55 |
| Embodiment 3 | 50 | 0.24 | 208 | 40 | 83.3 | 59 |
| Embodiment 4 | 60 | 0.27 | 222 | 50 | 82.5 | 62 |
| Embodiment 5 | 70 | 0.30 | 233 | 20 | 85.2 | 53 |
| Embodiment 6 | 80 | 0.32 | 250 | 30 | 84.1 | 56 |
| Embodiment 7 | 100 | 0.37 | 270 | 40 | 83.1 | 63 |
| Embodiment 8 | 120 | 0.40 | 300 | 50 | 82.1 | 64 |
| Embodiment 9 | 150 | 0.45 | 333 | 20 | 85.0 | 56 |
| Embodiment 10 | 170 | 0.47 | 362 | 30 | 83.9 | 60 |
| Embodiment 11 | 200 | 0.51 | 392 | 40 | 82.8 | 66 |
| Embodiment 12 | 260 | 0.52 | 500 | 50 | 81.0 | 68 |
| Embodiment 13 | 25 | 0.13 | 192 | 50 | 85.0 | 55 |
| Embodiment 14 | 90 | 0.30 | 300 | 40 | 84.3 | 58 |
| Embodiment 15 | 130 | 0.40 | 325 | 30 | 83.0 | 60 |
| Embodiment 16 | 250 | 0.52 | 481 | 20 | 82.1 | 67 |
| Embodiment 17 | 300 | 0.49 | 612 | 48 | 81.7 | 64 |

(continued)

|  | W | $I_D/I_G$ | A | Porosity (%) | Cycle capacity retention rate (500 cycles) | Low-temperature discharge capacity retention rate (%) |
|---|---|---|---|---|---|---|
| Embodiment 18 | 380 | 0.54 | 703 | 41 | 80.9 | 59 |
| Comparative Embodiment 1 | 590 | 0.58 | 1017 | 55 | 70.0 | 40 |
| Comparative Embodiment 2 | 10 | 0.10 | 100.00 | 15 | 75.0 | 38 |

As can be seen from Embodiments 1 to 18 versus Comparative Embodiments to 2 in Table 1, when the values of A, W, $I_D/I_G$ ratio, and porosity of the active material layer fall within the ranges specified herein, the kinetic performance of the electrochemical device is improved significantly, and the cycle performance and low-temperature discharge performance of the electrochemical device are enhanced effectively.

Further, Embodiments 19 to 31 are obtained according to the above preparation method. Table 2 shows how the type of the negative active material, the $I_D/I_G$ value of the negative active material layer, and the thermal stability measured in a nitrogen protection atmosphere affect the cycle performance and low-temperature discharge performance of the lithium-ion battery.

**Table 2**

|  | $I_D/I_G$ | Type of negative active material | T1 (°C) | T2 (°C) | T3 (°C) | P (mW/mg) | Cycle capacity retention rate (500 cycles) | Low-temperature discharge capacity retention rate (%) |
|---|---|---|---|---|---|---|---|---|
| Embodiment 7 | 0.37 | Natural graphite | 250 | 440 | 550 | 0.035 | 83.1 | 63 |
| Embodiment 19 | 0.37 | Natural graphite | 230 | 410 | 450 | 0.040 | 86.2 | 65 |
| Embodiment 20 | 0.37 | Natural graphite | 210 | 380 | 445 | 0.070 | 86.0 | 67 |
| Embodiment 21 | 0.37 | Natural graphite | 200 | 320 | 440 | 0.100 | 85.8 | 68 |
| Embodiment 22 | 0.37 | Natural graphite | 180 | 290 | 435 | 0.120 | 85.6 | 70 |
| Embodiment 23 | 0.37 | Artificial graphite | 110 | 150 | 410 | 0.200 | 83.8 | 72 |
| Embodiment 24 | 0.37 | Artificial graphite | 120 | 160 | 415 | 0.215 | 84.3 | 71 |
| Embodiment 25 | 0.37 | Artificial graphite | 130 | 170 | 423 | 0.236 | 84.9 | 71 |
| Embodiment 26 | 0.37 | Artificial graphite | 140 | 180 | 425 | 0.255 | 85.2 | 70 |
| Embodiment 27 | 0.37 | Natural graphite + artificial graphite | 150 | 200 | 426 | 0.127 | 86.5 | 78 |
| Embodiment 28 | 0.37 | Natural graphite + artificial graphite | 158 | 216 | 428 | 0.138 | 87.1 | 76 |

(continued)

| | $I_D/I_G$ | Type of negative active material | T1 (°C) | T2 (°C) | T3 (°C) | P (mW/mg) | Cycle capacity retention rate (500 cycles) | Low-temperature discharge capacity retention rate (%) |
|---|---|---|---|---|---|---|---|---|
| Embodiment 29 | 0.37 | Natural graphite + artificial graphite | 169 | 238 | 431 | 0.156 | 87.8 | 76 |
| Embodiment 30 | 0.37 | Natural graphite + artificial graphite | 175 | 259 | 433 | 0.185 | 88.2 | 73 |
| Embodiment 31 | 0.37 | Artificial graphite | 100 | 140 | 400 | 0.280 | 82.2 | 60 |

As can be seen from Embodiment 7 and Embodiments 19 to 31, different types of graphite cause the negative active material layer to exhibit different electrochemical activity and thermal stability. When the negative active material layer includes at least one of natural graphite or artificial graphite, the graphite can improve the performance of the electrochemical device. When the negative active material layer includes both natural graphite and artificial graphite, a synergistic effect is produced between the two types of graphite to reduce the consumption of active lithium and shorten the ion transport path, thereby making the electrochemical device superior in cycle performance and low-temperature discharge performance.

Further, Embodiments 32 to 35 are obtained according to the above preparation method. Table 3 shows how the constituents of the electrolyte solution and the content of each constituent affect the cycle performance and low-temperature discharge performance of the lithium-ion battery.

**Table 3**

| | Type of negative active material | X | Y | Z | X/Y | Z/Y | Cycle capacity retention rate (500 cycles) | Low-temperature discharge capacity retention rate (%) |
|---|---|---|---|---|---|---|---|---|
| Embodiment 29 | Natural graphite + artificial graphite | 15 | 3 | 70 | 5 | 23.3 | 87.8 | 76 |
| Embodiment 32 | Natural graphite + artificial graphite | 16 | 11 | 35 | 1.5 | 3.2 | 88.0 | 80 |
| Embodiment 33 | Natural graphite + artificial graphite | 20 | 8 | 50 | 2.5 | 6.3 | 88.8 | 79 |
| Embodiment 34 | Natural graphite + artificial graphite | 25 | 4 | 55 | 6.25 | 13.75 | 89.8 | 78 |
| Embodiment 35 | Natural graphite + artificial graphite | 32 | 12 | 30 | 3 | 2.5 | 86.0 | 70 |

As shown in Table 3, based on Embodiment 29, a further study is made to investigate how the ethylene carbonate, propylene carbonate, and diethyl carbonate added in the electrolyte solution affect the cycle capacity retention rate and the low-temperature discharge capacity retention rate of the electrochemical device.

As can be seen from Embodiment 29 and Embodiments 32 to 35, when the contents of the ethylene carbonate, propylene carbonate, and diethyl carbonate in the electrolyte solution satisfy the relations: $1.5 \leq X/Y \leq 8$, $2.5 \leq Z/Y \leq 25$, $15 \leq X \leq 32$, $3 \leq Y \leq 12$, or $30 \leq Z \leq 70$, a low-impedance SEI film can be formed on the surface of the negative electrode to alleviate the disruption caused by ion intercalation onto the graphite structure, and enhance the cycle performance and low-temperature discharge performance of the electrochemical device.

Although illustrative embodiments have been demonstrated and described above, a person skilled in the art understands that the foregoing embodiments are never to be construed as a limitation on this application, and changes, replacements, and modifications may be made to the embodiments without departing from the principles and scope of this application.

**Claims**

1. An electrochemical device, comprising a positive electrode, a separator, an electrolyte solution and a negative electrode; wherein the negative electrode comprises a negative current collector and a negative active material layer disposed on a surface of the negative current collector, wherein the electrochemical device satisfies: $A = W/(I_D/I_G)$, and $150 \leq A \leq 1000$, wherein
as tested by differential scanning calorimetry, the negative active material layer exhibits an exothermic peak at a temperature ranging from a room temperature to 450 °C, a peak area of the exothermic peak is W J/g, and, as tested by Raman spectroscopy, a ratio of a peak intensity at a wavenumber 1350 cm$^{-1}$ to a peak intensity at a wavenumber 1580 cm$^{-1}$ of the negative active material layer is $I_D/I_G$.

2. The electrochemical device according to claim 1, wherein $150 \leq A \leq 750$.

3. The electrochemical device according to claim 1, wherein the electrochemical device satisfies at least one of the following characteristics (a) to (c):

   (a)

   $$20 \leq W \leq 490;$$

   (b)

   $$100 \leq W \leq 300;$$

   or
   (c)

   $$0.13 \leq I_D/I_G \leq 0.54.$$

4. The electrochemical device according to claim 1, wherein, as tested by differential scanning calorimetry, the negative active material layer satisfies at least one of the following characteristics (d) to (g):

   (d) an exothermic onset temperature of the negative active material layer is $T_1$ °C, satisfying: $100 \leq T_1 \leq 250$;
   (e) an initial peak temperature in thermal decomposition of the negative active material layer is $T_2$ °C, satisfying: $140 \leq T_2 \leq 440$;
   (f) a complete-decomposition temperature of the negative active material layer is $T_3$ °C, satisfying: $400 \leq T_3 \leq 550$; or
   (g) an exothermic power per unit mass of the negative active material layer is P mW/mg, satisfying: $0.035 \leq P \leq 0.280$.

5. The electrochemical device according to claim 4, wherein the negative active material layer satisfies at least one of the following characteristics (h) to (i):

   (h)

   $$110 \leq T_1 \leq 205;$$

   or

(i)

$$150 \le T_2 \le 370.$$

6. The electrochemical device according to claim 1, wherein the negative active material layer comprises a negative active material, and the negative active material comprises at least one of natural graphite or artificial graphite.

7. The electrochemical device according to claim 1, wherein the negative active material layer satisfies at least one of the following characteristics (j) to (k):

   (j) the negative active material layer comprises negative active material particles containing pores; or
   (k) a porosity of the negative active material layer is 20% to 50%.

8. The electrochemical device according to claim 1, wherein the electrolyte solution comprises ethylene carbonate, propylene carbonate, and diethyl carbonate; based on a mass of the electrolyte solution, a mass percent of the ethylene carbonate is X%, a mass percent of the propylene carbonate is Y%, and a mass percent of the diethyl carbonate is Z%, wherein $1.5 \le X/Y \le 8$, and $2.5 \le Z/Y \le 25$.

9. The electrochemical device according to claim 8, wherein $15 \le X \le 32$, $3 \le Y \le 12$, and $30 \le Z \le 70$.

10. An electronic device, comprising the electrochemical device according to any one of claims 1 to 9.

## INTERNATIONAL SEARCH REPORT

| International application No. |
| --- |
| **PCT/CN2022/081993** |

| A. | CLASSIFICATION OF SUBJECT MATTER |
| --- | --- |

H01M 4/133(2010.01)i

According to International Patent Classification (IPC) or to both national classification and IPC

| B. | FIELDS SEARCHED |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 电池, 负极, 阳极, 1350, 放热, 峰, 面积, 积分, ID, IG, 比值, 比率, DSC, DTA, 差热, battery, cell, negative, anode, 1350, heat+, peak, area, integral, ID, IG, ratio

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111354944 A (NINGDE AMPEREX TECHNOLOGY LTD.) 30 June 2020 (2020-06-30) description, paragraphs 4-140, and figures 1-3 | 1-10 |
| X | CN 113497230 A (NINGDE AMPEREX TECHNOLOGY LTD.) 12 October 2021 (2021-10-12) description, paragraphs 4-140, and figures 1-3 | 1-10 |
| A | CN 114068864 A (NINGDE AMPEREX TECHNOLOGY LTD.) 18 February 2022 (2022-02-18) entire document | 1-10 |
| A | CN 1591958 A (SONY CORPORATION) 09 March 2005 (2005-03-09) entire document | 1-10 |
| A | CN 113646920 A (MITSUBISHI CHEM CORP.) 12 November 2021 (2021-11-12) entire document | 1-10 |
| A | CN 111384395 A (NINGDE AMPEREX TECHNOLOGY LTD.) 07 July 2020 (2020-07-07) entire document | 1-10 |
| A | CN 113097433 A (NINGDE AMPEREX TECHNOLOGY LTD.) 09 July 2021 (2021-07-09) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 December 2022** | **15 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/081993**

| Patent document cited in search report | | | Publication date (day/month/year) | Patent family member(s) | | | Publication date (day/month/year) |
|---|---|---|---|---|---|---|---|
| CN | 111354944 | A | 30 June 2020 | WO | 2021184532 | A1 | 23 September 2021 |
| | | | | CN | 111354944 | B | 26 March 2021 |
| CN | 113497230 | A | 12 October 2021 | None | | | |
| CN | 114068864 | A | 18 February 2022 | None | | | |
| CN | 1591958 | A | 09 March 2005 | TW | 200503310 | A | 16 January 2005 |
| | | | | KR | 20050004042 | A | 12 January 2005 |
| | | | | JP | 2005026049 | A | 27 January 2005 |
| | | | | US | 2005019660 | A1 | 27 January 2005 |
| | | | | CA | 2472665 | A1 | 01 January 2005 |
| CN | 113646920 | A | 12 November 2021 | US | 2022013779 | A1 | 13 January 2022 |
| | | | | KR | 20210143796 | A | 29 November 2021 |
| | | | | EP | 3951926 | A1 | 09 February 2022 |
| | | | | JP | 2021061230 | A | 15 April 2021 |
| | | | | WO | 2020196914 | A1 | 01 October 2020 |
| | | | | EP | 3951926 | A4 | 13 July 2022 |
| CN | 111384395 | A | 07 July 2020 | WO | 2021184531 | A1 | 23 September 2021 |
| CN | 113097433 | A | 09 July 2021 | None | | | |

Form PCT/ISA/210 (patent family annex) (January 2015)